# EUROPÄISCHE PATENTSCHRIFT

(11) **EP 1 716 348 B1**
(45) Veröffentlichungstag und Bekanntmachung des Hinweises auf die Patenterteilung: **13.02.2008**
(21) Anmeldenummer: 05707545.9
(22) Anmeldetag: 21.02.2005
(51) Int. Cl.: F16D 29/00, F15B 15/26

(54) **MOTOR-FLUIDISCHER ANTRIEB, INSBESONDERE FÜR DRE-, SCHWENK- ODER LINEARANTRIEBSEINHEITEN SOWIE VERFAHREN HIERFÜR**
MOTOR FLUID DRIVE, ESPECIALLY FOR ROTARY, PIVOTAL OR LINEAR DRIVE UNITS AND CORRESPONDING METHOD
ENTRAINEMENT MOTEUR ET FLUIDIQUE, EN PARTICULIER POUR DES UNITES D'ENTRAINEMENT ROTATIF, PIVOTANT OU LINEAIRE ET PROCEDE ASSOCIE

(30) Priorität: 20.02.2004 DE 102004009913
(43) Veröffentlichungstag der Anmeldung: 02.11.2006
(73) Patentinhaber: Schunk GmbH & Co. KG Spann- und Greiftechnik, 74348 Lauffen (DE)
(72) Erfinder: KERPE, Stefan, 71272 Renningen (DE); SCHUSTER, Andreas, 71543 Wüstenrot/Neulautern (DE); FELLHAUER, Bruno, 74336 Brackenheim (DE); STANICKI, Andreas, 74226 Nordheim (DE)
(74) Vertreter: Bulling, Alexander
(86) Internationale Anmeldenummer: PCT/EP2005/001767
(87) Internationale Veröffentlichungsnummer: WO 2005/080817

(56) Entgegenhaltungen:
- EP-A- 0 163 602
- DE-A1- 4 413 999
- DE-A1- 10 128 340
- US-A- 5 984 072
- US-A1- 2002 129 699

## Beschreibung

Die Erfindung betrifft eine Dreh- oder Schwenkeinheit mit einem Antrieb sowie ein Verfahren zum Betreiben einer derartigen Einheit. Die Dreh- oder Schwenkeinheit weist dabei einen in einem Zylinder eines Gehäuses untergebrachten, durch fluidische Druckmittel beaufschlagbaren und in axialer Richtung verfahrbaren Arbeitskolben auf.

Derartige Dreh- oder Schwenkeinheit mit zugehörigen Antrieben werden in der Automatisierungstechnik weit verbreitet eingesetzt, da sie aufgrund der fluidischen, insbesondere pneumatischen, Druckmittel eine sehr hohe Leistungsdichte besitzen. Dabei kann vorgesehen sein, dass der Arbeitskolben über eine Drehkopplung mit einem in dem Gehäuse drehbar gelagerten Schwenkteil wirkverbunden ist. Dadurch wird erreicht, dass über die Bewegung des Kolbens in axialer Richtung eine Schwenkbewegung des Schwenkteils erfolgt. An dem Schwenkteil können beispielsweise Greifmittel angeordnet sein, mit denen Werkstücke gegriffen und über das Schwenkteil verschwenkt werden können.

Um eine bestimmte Sollposition mit dem Kolben anfahren zu können, ist aus dem Stand der Technik bekannt, Stoßdämpfer zu verwenden, die die lineare Bewegung des Arbeitskolbens in axialer Richtung abbremsen beziehungsweise begrenzen. Die Verwendung von Stoßdämpfern bringt eine Reihe von Nachteilen mit sich. Insbesondere bei höheren Drücken sind die Stoßdämpfer den hohen Belastungen nicht gewachsen. Stoßdämpfer haben außerdem den Nachteil, dass sie einem Verschleiß unterliegen. Dadurch kann nicht gewährleistet werden, dass bei längerer Verwendung von Stoßdämpfern reproduzierbare Dämpfungsraten erzielt werden können.

Stoßdämpfer sind zudem vergleichsweise teuer, benötigen im oder am Antrieb entsprechenden Bauraum und führen zu einer Leistungsbegrenzung des Antriebs.

Die Verwendung von Stoßdämpfern hat außerdem den Nachteil, dass der Kolben, beziehungsweise die mit dem Antrieb bewegte Last, nicht in jede beliebige Lage verfahren werden kann und deshalb nicht frei positionierbar ist. Eine Positionierung kann nur über ein entsprechendes Anbringen eines Stoßdämpfers bzw. zugehörigen Anschlags an einer bestimmten Stelle erfolgen. Eine Änderung der Positionierung kann nur durch die Änderung der Lage des Stoßdämpfers bzw. Anschlags herbeigeführt werden. Eingangs beschriebene, bekannte Antriebe weisen deshalb eine sehr geringe Flexibilität auf.

Der vorliegenden Erfindung liegt die Aufgabe zugrunde, eine Dreh- oder Schwenkeinheit der eingangs genannten Art derart weiterzubilden, dass zum einen eine hohe Leistungsdichte erhalten bleibt und zum anderen die Positionierbarkeit, und damit die Flexibilität des Antriebs, erhöht wird.

Diese Aufgabe wird durch eine Dreh- oder Schwenkeinheit mit den Merkmalen des Anspruchs 1 gelöst.

Durch die Verwendung eines Motors, der über die Kopplungsmittel die Bewegung des Arbeitskolbens in axialer Richtung antreibt und/oder abbremst, kann erreicht werden, dass der Arbeitskolben in quasi jeder Position abgebremst oder angetrieben werden kann. Dadurch wird die Flexibilität des Antriebs erhöht; der Arbeitskolben ist frei positionierbar und kann in jeder beliebigen Position angehalten und/oder angefahren werden. Auf entsprechende Stoßdämpfer bzw. Anschläge, die ein Anfahren einer Sollposition bewirken sollen, kann verzichtet werden. Das Anfahren einer Sollposition kann durch entsprechendes Abbremsen der Bewegung des Arbeitskolbens erzielt werden.

Erfindungsgemäß ist folglich vorgesehen, dass der Arbeitskolben über eine Drehkopplung mit einem in dem Gehäuse drehbar gelagerten Schwenkteil wirkverbunden ist. Dabei ist vorteilhaft, dass in jeder beliebigen Schwenkposition, also unter jedem beliebigen Drehwinkel, das Schwenkteil gezielt abgebremst werden kann.

Durch gezieltes Antreiben beziehungsweise Abbremsen des Arbeitskolbens durch den Motor kann außerdem eine Feinpositionierung beziehungsweise Feineinstellung der Lage des Arbeitskolbens im Zylinder, und damit eine genaue Positionierung der zu bewegenden Last, erreicht werden. Erfindungsgemäß ist der Motor, der als Elektromotor ausgebildet sein kann, folglich dazu geeignet, den Arbeitskolben auf eine Sollposition zu bewegen, das heißt abzubremsen, gegebenenfalls anzutreiben, gegebenenfalls in Feinstellung die Sollposition anzufahren.

Aus der Automatisierungstechnik sind zwar Antriebe bekannt, bei denen eine durch einen Elektromotor erzeugte rotatorische Bewegung in eine lineare Bewegung, beispielsweise durch einen Spindelantrieb oder einen Zahnstangenantrieb, übersetzt wird. Der Vorteil dieser Antriebe ist unter anderem eine freie Positionierbarkeit der bewegten Last und ihr schnelles Ansprechverhalten. Nachteilig ist allerdings die sehr geringe Leistungsdichte. Um große Lasten dynamisch bewegen zu können, werden sehr leistungsstarke Motoren benötigt, für die entsprechend großer Bauraum zur Verfügung gestellt werden muss. Ferner ist zu berücksichtigen, dass die verwendeten mechanischen Kopplungsmittel großen Kräften, aufgrund großer Lasten, ausgesetzt sind. Sie unterliegen einem hohen Verschleiß.

Durch die erfindungsgemäße Kombination von einem fluidischen Antrieb, der eine hohe Leistungsdichte besitzt, und der Kopplung des Arbeitskolbens mit einem Motor zum Antreiben und/oder Abbremsen des Arbeitskolbens, werden die Vorteile von fluidischen und insbesondere elektrischen Antrieben in bisher nicht bekannter Art und Weise vereint. Die hohe Leistungsdichte der fluidischen Antriebe wird beibehalten; zusätzlich wird die Flexibilität motorischer Antriebsprinzipien ausgenutzt.

Als Fluid kann insbesondere ein Gas, wie beispielsweise Luft, oder eine Hydraulikflüssigkeit, wie beispielsweise Hydrauliköl, Verwendung finden.

Eine besonders vorteilhafte Ausgestaltung der Erfindung ergibt sich dann, wenn die mechanischen Kopplungsmittel eine an dem Arbeitskolben angeordnete Spindelmutter beziehungsweise Spindelstange und eine von dem Motor antreibbare Spindelstange beziehungsweise Spindelmutter umfassen. Der Motor kann dabei direkt oder indirekt, beispielsweise über ein Getriebe, mit der Spindelmutter beziehungsweise Spindelstange in Wirkverbindung stehen. Insbesondere kann eine Kugelumlaufspindel Verwendung finden. Durch das Vorsehen einer Spindelstange/Spindelmutter können günstige Übersetzungsverhältnisse realisiert werden, über die der Arbeitskolben entsprechend angetrieben oder abgebremst werden kann. Außerdem kann eine Spindelmutter beziehungsweise Spindelstange auf vorteilhafte Art und Weise am Kolben, insbesondere an einer seiner Stirnseiten, angeordnet werden. Die Spindelstange durchgreift dann den entsprechenden Zylinderraum und steht auf der dem Kolben abgewandten Seite mit dem Motor in Wirkverbindung. Zusätzlicher Bauraum wird folglich nicht benötigt.

Gemäß einer anderen Ausführungsform der Erfindung ist denkbar, dass die mechanischen Kopplungsmittel eine an dem Arbeitskolben angeordnete Zahnstange und ein von dem Motor antreibbares Zahnritzel umfassen. Auch damit kann der Arbeitskolben vorteilhaft in axialer Richtung angetrieben oder abgebremst werden. Die Zahnstange durchgreift hierbei vorteilhafterweise den Zylinderraum in axialer Richtung; insofern ist auch hier kein zusätzlicher Bauraum vorzusehen.

Ferner kann erfindungsgemäß vorgesehen sein, dass die mechanischen Kopplungsmittel ein von dem Arbeitskolben über eine Drehkopplung drehangetriebenes Schneckenrad und ein von dem Motor antreibbares, das Schneckenrad kämmendes Zahnritzel umfassen. Eine derartige Ausführungsform kann insbesondere in Längsrichtung kompakt bauen.

Um eine kompakte Bauweise zu erreichen, ist denkbar, dass der Motor an das Gehäuse anflanschbar oder angeflanscht ist. Das Gehäuse und/oder der Motor kann hierzu entsprechende Flanschabschnitte vorsehen. Der Motor kann allerdings auch als Hohlwellenmotor ausgebildet sein, der wenigstens teilweise innerhalb des Arbeitskolbens angeordnet sein kann.

Eine bevorzugte Ausführungsform der Erfindung sieht vor, dass eine Regel- und/oder Steuereinheit vorgesehen ist, die den Motor in Abhängigkeit von in der Position und/oder der zeitlichen Änderung der Position des Arbeitskolbens und/oder vom jeweiligen Druck und/oder der zeitlichen Änderung des jeweiligen Drucks in den Druckräumen des Zylinders ansteuert. Die Ansteuerung kann hierbei unter Zuhilfenahme von Messsystemen erfolgen, die direkt die Position des Arbeitskolbens oder die Position eines mit dem Arbeitskolben in Bewegungskopplung stehenden Elements, beispielsweise eines Greifmittels, bestimmen. Vorteilhafterweise ist die Regel-und/oder Steuereinheit programmierbar. Dazu können vorgegebene Sollpositionen eingegeben werden, die dann von dem Arbeitskolben durch Beaufschlagen des Arbeitskolbens mittels Druckmitteln und durch Abbremsen und/oder Positionieren des Arbeitskolbens unter Zuhilfenahme des Motors angefahren werden. Beim Bewegen des Arbeitskolbens durch Beaufschlagen des Kolbens kann der Motor stromlos frei mitdrehen oder die durch Druckbeaufschlagung bewirkte Bewegung unterstützen.

Erfindungsgemäß ist auch denkbar, dass eine Regel- und/oder Steuereinheit vorgesehen ist, die bei Erreichen einer Grenzlast des Motors den jeweiligen Druck in den Druckräumen des Zylinders derart ansteuert, dass die Last des Motors gesengt und/oder die durch den Motor bewirkte oder beabsichtigte Bewegung des Arbeitskolbens unterstützt wird. Wird eine vorgegebene Sollposition des Arbeitskolbens erreicht, so kann die Bewegung des Arbeitskolbens durch Reduzieren des Drucks im entsprechenden Druckraum oder durch Beaufschlagen des Arbeitskolbens mit Gegendruck und/oder durch Abbremsen der Bewegung durch entsprechendes Ansteuern und Bestromen des Motors beeinflusst werden. Ist die auf den Motor wirkende Last zu groß, so werden die Druckräume derart angesteuert, dass die Bewegung des Arbeitskolbens durch den Motor unterstützt wird und damit die auf den Motor wirkende Last gesengt wird. Die Bewegung des Motors erfährt folglich eine Servounterstützung. Dies hat den Vorteil, dass ein vergleichsweise klein dimensionierter Motor zum positionsgenauen Anfahren von Sollpositionen des Arbeitskolbens Verwendung finden kann, selbst dann wenn mit dem Arbeitskolben hohe Lasten gefahren werden sollen.

Die Bestimmung der auf den Motor wirkenden Last kann beispielsweise durch Überwachen des vom Motor aufgenommen Motorstroms erfolgen. Auch denkbar ist, dass an der Motorwelle ein Drehmomentsensor angeordnet ist, über den das Motordrehmoment und damit die auf den Motor wirkende Last bestimmt werden kann. Ein weitere Möglichkeit ist, die Last über das Reaktionsmoment des Motors zu bestimmen, beispielsweise mit entsprechenden Sensoren an der Motorlagerung oder durch Erfassen des Ausschlagens eines drehbar gelagerten oder frei hängenden Motors.

Als vorteilhaft hat sich herausgestellt, wenn das Kopplungsmittel ein hohes Übersetzungsverhältnis aufweist. Durch Vorsehen eines hohen Übersetzungsmittels können klein dimensionierte Motoren, insbesondere Elektromotoren mit einem kleinen Drehmoment, Verwendung finden. Das kleine Ausgangsdrehmoment des Motors wird über das Übersetzungsverhältnis in ein entsprechend großes Drehmoment gewandelt. Dadurch können die klein dimensionierten Motoren auch vergleichsweise hohen Drücken im Zylinderraum standhalten. Die Bewegung des Arbeitskolbens kann damit abgebremst werden.

Die Erfindung betrifft außerdem ein Verfahren zum Betreiben einer erfindungsgemäßen Einheit, wobei beim Beaufschlagen des Zylinders zum Verfahren des Arbeitskolbens der Motor wenigstens weitgehend lastfrei mitdreht oder die Bewegung des Arbeitskolbens unterstützt und wobei beim, oder kurz vor Erreichen der Sollposition des Arbeitskolbens der Motor zum Abbremsen der Bewegung des Arbeitskolbens angesteuert wird. Dabei kann insbesondere der Druck im Zylinder entsprechend reduziert werden bzw. ein Gegendruck im entsprechenden Druckraum aufgebaut werden. Es kann auch der entsprechende Druckraum druckfrei geschalten werden. Das Abbremsens erfolgt derart, dass der Arbeitskolbens die Sollposition erreicht.

Weitere Merkmale und Einzelheiten der Erfindung sind der folgenden Beschreibung zu entnehmen, in der die Erfindung anhand eines in der Zeichnung dargestellten Ausführungsbeispiels näher beschrieben und erläutert ist.

Es zeigen:
- Figur 1:: Ein erster erfindungsgemäßer Antrieb im Längsschnitt, und
- Figur 2:: eine zweite Ausfühtungsform der Erfindung.

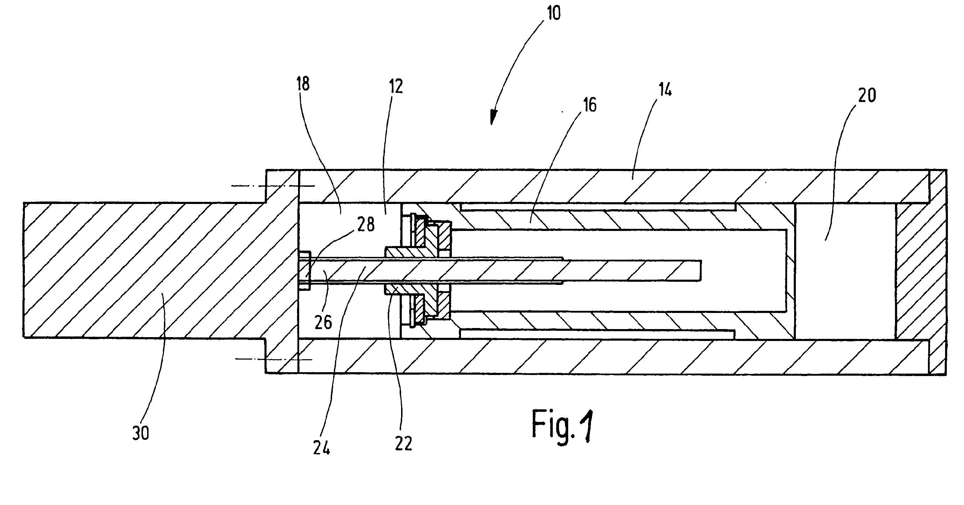

In der Figur 1 ist ein erfindungsgemäßer Antrieb 10 im Längsschnitt dargestellt. Der Antrieb 10 kann vorgesehen sein für eine Dreh- oder Schwenkeinheit. Der Antrieb 10 weist einen Zylinder 12 in einem Gehäuse 14 auf. Der Zylinder 12 ist als einteilig, durchgehender Zylinder dargestellt. Erfindungsgemäß ist allerdings auch denkbar, dass der Zylinder 12 mehrere Zylinderabschnitte umfasst, die jeweils von einem Zylinderrohr gebildet werden. In dem Zylinder 12 ist ein Arbeitskolben 16 angeordnet, der den Zylinder 12 in zwei Druckräume 18 und 20 unterteilt. Die Druckräume 18 und 20 sind jeweils wechselseitig mit einem Druckmittel derart beaufschlagbar, dass der Kolben 16 sich in axialer Richtung bewegt. Der Kolben 16 ist entweder direkt oder indirekt mit Mitteln gekoppelt, die dazu geeignet sind, Werkstücke zu bewegen.

Findet der Antrieb 10 in einer Dreh- oder Schwenkantriebseinheit Verwendung, so ist vorteilhafterweise der Arbeitskolben 16 über eine nicht dargestellte Drehkopplung mit einem in dem Gehäuse 14 drehbar gelagerten Schwenkteil wirkverbunden. Bei Bewegung des Arbeitskolbens in axialer Richtung erfolgt also eine Verdrehung/Verschwenkung des Schwenkteils.

An einer Stirnseite des Arbeitskolbens 16 ist eine drehfest mit dem Arbeitskolben 16 verbundene Spindelmutter 22 vorgesehen. In der Spindelmutter 22 ist eine Spindelstange 24 drehbar angeordnet, deren dem Kolben 16 abgewandtes freies Ende 26 an einer Antriebswelle 28 eines Elektromotors 30 angeordnet ist. Die Spindelstange 24 ist folglich über den Elektromotor 30 rotatorisch antreibbar. Beim Verdrehen der Spindelstange 24 wird aufgrund der mit der Spindelstange 24 gekoppelten Spindelmutter 22 eine Bewegung des Arbeitskolbens 16 in axialer Richtung ermöglicht. Selbstverständlich kann auch die Spindelmutter an der Ausgangswelle 28 des Elektromotors 30 drehgekoppelt angeordnet sein. In diesem Falle ist dann die Spindelstange 24 drehfest an dem Kolben 16 anzuordnen.

Die Spindelstange 24 und die Spindelmutter 22 bilden mechanische Kopplungsmittel, durch welche der Motor 30 den Arbeitskolben 16 in axialer Richtung antreiben oder abbremsen kann.

Das Übersetzungsverhältnis zwischen Spindelstange 24 und Spindelmutter 22 kann dabei derart sein, dass keine Selbsthemmung zwischen der Spindelstange 24 und der Spindelmutter 22 auftritt. Hierdurch wird gewährleistet, dass beim Bewegen des Kolbens 16 durch Beaufschlagung der Druckräume 18 oder 20 die Spindelwelle 24 frei mitdrehen kann. Der Motor 30 ist vorteilhafterweise in diesem Falle ausgeschaltet; der Rotor des Motors 30 dreht ohne Last mit.

Das Übersetzungsverhältnis ist ferner derart hoch, dass eine vergleichsweise kleine Auslegung des Elektromotors genügt, um die Bewegung des Kolbens 16 durch den Motor 30 abbremsen zu können.

Vorteilhafterweise umfasst der Antrieb 10 eine nicht dargestellte Regel- und Steuereinheit, die die Druckbeaufschlagung der Druckräume 18 und 20 sowie die Ansteuerung des Elektromotors 30 entsprechend regelt. Kurz vor Erreichen einer frei vorgebbaren Sollposition des Arbeitskolbens 16 kann der Druck in dem entsprechenden Druckraum 18 oder 20 gesenkt bzw. ein entsprechender Gegendruck aufgebaut werden und der Elektromotor 30 derart angesteuert werden, dass ein Abbremsen der Bewegung des Arbeitskolbens 16 erfolgt. Eine vorgegebene Sollposition des Arbeitskolbens 16, beziehungsweise eines mit dem Arbeitskolben 16 verbundenen Mittels, kann dadurch gewährleistet werden. Vorteilhafterweise sind Messsysteme vorhanden, die entweder die Ist-Position des Arbeitskolbens 16 oder die Ist-Position eines mit dem Arbeitskolben 16 gekoppelten Mittels erfassen.

Vorteil des erfindungsgemäßen Antriebs 10 ist, dass er zum einen eine hohe Leistungsdichte aufweist und zum anderen eine freie, sehr flexible Positionierbarkeit des Arbeitskolbens 16, beziehungsweise der damit bewegten Last, ermöglicht. Die hohe Leistungsdichte wird durch die Druckbeaufschlagung der Druckräume 18, 20 erzielt. Hohe Lasten können bei hohen Kolbengeschwindigkeiten bewegt werden. Dennoch ist eine hohe Flexibilität gewährleistet. Durch die mechanischen Kopplungsmittel und den Elektromotor 30 können hohe Lasten frei positioniert werden.

Wird eine vorgegebene Sollposition des Arbeitskolbens 16 erreicht, so wird die Bewegung des Arbeitskolbens 16 durch Reduzieren des Drucks im druckbeaufschlagten Druckraum oder durch Beaufschlagen des Arbeitskolbens mit Gegendruck und/oder durch Abbremsen der Bewegung durch entsprechendes Ansteuern und Bestromen des Motors 30 beeinflusst. Ist die auf den Motor 30 wirkende Last zu groß, so werden die Druckräume 18, 20 derart angesteuert, dass die Bewegung des Arbeitskolbens 16 durch den Motor 30 unterstützt wird und damit die auf den Motor 30 wirkende Last gesengt wird. Die Bewegung des Motors 30 erfährt folglich eine Servounterstützung. Die auf den Motor wirkende Last kann beispielsweise mit einem Drehmomentsensor an der Motorwelle erfasst werden.

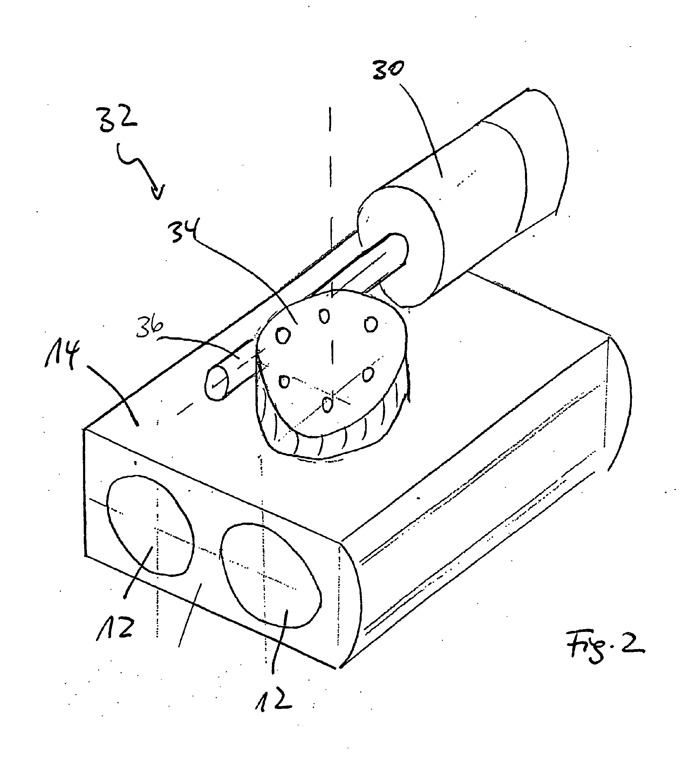

In der Figur 2 ist ein Schenkantrieb 32 gezeigt, mit zwei in den Zylindern 12 eines Gehäuses 14 untergebrachten, durch fluidische Druckmittel beaufschlagbaren und in axialer Richtung verfahrbaren, in dieser Figur nicht zusehenden Arbeitskolben. An dem Arbeitskolben sind mechanische Kopplungsmittel angeordnet, die mit dem Motor 30 derart gekoppelt sind, dass der Arbeitskolben durch den Motor 30 abbremsbar und/oder antreibbar ist. Die mechanischen Kopplungsmittel umfassen hierbei ein mit dem Arbeitskolben und/oder dessen Kolbenstange über eine Drehkopplung in dem Gehäuse (12) drehbar gelagertes Schneckenrad 34 und eine von dem Motor 30 antreibbares, das Schneckenrad 34 kämmende Schnecke 36.

## Patentansprüche

1. Dreh- oder Schwenkeinheit (10, 32) mit einem Antrieb (10, 32), der einen in einem Zylinder (12) eines Gehäuses (14) untergebrachten, durch fluidische Druckmittel beaufschlagbaren und in axialer Richtung verfahrbaren Arbeitskolben (16) aufweist, wobei der Arbeitskolben (16) über eine Drehkopplung mit einem in dem Gehäuse drehbar gelagerten Schwenkteil, das zur Anordnung von Greifmitteln vorgesehen ist, derart wirkverbunden ist, dass über die Bewegung des Arbeitskolbens (16) in axialer Richtung eine Schwenkbewegung des Schwenkteils erfolgt, wobei an dem Arbeitskolben (16) mechanische Kopplungsmittel (22, 24) angeordnet sind, die mit einem Motor (30) derart koppelbar sind, dass der Arbeitskolben (16) durch den Motor (30) in axialer Richtung abbremsbar und/oder antreibbar ist.

2. Einheit (10) nach Anspruch 1, **dadurch gekennzeichnet, dass** die mechanischen Kopplungsmittel (22, 24) eine an dem Arbeitskolben (16) angeordnete Spindelmutter (22) bzw. Spindelstange und eine von dem Motor (30) antreibbare Spindelstange (24) bzw. Spindelmutter umfassen.

3. Einheit (10) nach Anspruch 2, **dadurch gekennzeichnet, dass** die Spindelmutter (22) drehfest mit dem Arbeitskolben (16) verbunden ist und dass in der Spindelmutter (22) eine Spindelstange (24) drehbar angeordnet ist, deren dem Arbeitskolben (16) abgewandtes freies Ende (26) an einer Antriebswelle (28) des Motors (30) drehfest angeordnet ist.

4. Einheit (10) nach Anspruch 3, **dadurch gekennzeichnet, dass** das dem Motor (30) abgewandte freie Ende der Spindelstange (24) innerhalb des auf der dem Motor (30) abgewandten Seite geschlossen ausgebildeten Arbeitskolbens (16) liegt.

5. Einheit (10) nach Anspruch 1, **dadurch gekennzeichnet, dass** die mechanischen Kopplungsmittel eine an dem Arbeitskolben angeordnete Zahnstange und ein von dem Motor antreibbares Zahnritzel umfassen.

6. Einheit (32) nach Anspruch 1, **dadurch gekennzeichnet, dass** die mechanischen Kopplungsmittel ein von dem Arbeitskolben (14, 16) über eine Drehkopplung drehangetriebenes Schneckenrad (34) und eine von dem Motor (30) antreibbare, das Schneckenrad (34) kämmende Schnecke (36) umfassen.

7. Einheit (10, 32) nach einem der vorhergehenden Ansprüche, **dadurch gekennzeichnet, dass** die Kopplungsmittel (22, 24) ohne Selbsthemmung arbeiten.

8. Einheit (10, 32) nach einem der vorhergehenden Ansprüche, **dadurch gekennzeichnet, dass** der Motor (30) an das Gehäuse (14) anflanschbar oder angeflanscht ist oder innerhalb des Gehäuses (14) untergebracht ist.

9. Einheit (10, 32) nach einem der vorhergehenden Ansprüche, **dadurch gekennzeichnet, dass** eine Regel- und/oder Steuereinheit vorgesehen ist, die den Motor (30) in Abhängigkeit von in der Position und/oder der zeitlichen Änderung der Position des Arbeitskolbens (16) und/oder vom jeweiligen Druck und/oder der zeitlichen Änderung des jeweiligen Drucks in den Druckräumen (18, 20) des Zylinders ansteuert.

10. Einheit (10, 32) nach einem der vorhergehenden Ansprüche, **dadurch gekennzeichnet, dass** eine Regel- und/oder Steuereinheit vorgesehen ist, die bei Erreichen einer Grenzlast des Motors (30) den jeweiligen Druck in den Druckräumen (18, 18) des Zylinders derart ansteuert, dass die Motorlast gesengt und/oder die durch den Motor (30) bewirkte oder beabsichtigte Bewegung des Arbeitskolbens (16) unterstützt wird.

11. Einheit (10, 32) nach einem der vorhergehenden Ansprüche, **dadurch gekennzeichnet, dass** das die Kopplungsmittel ein hohes Übersetzungsverhältnis aufweisen.

12. Verfahren zum Betreiben einer Einheit (10, 32) nach einem der Ansprüche 1 bis 11, **dadurch gekennzeichnet, dass** beim Beaufschlagen des Zylinders (12) zum Verfahren des Arbeitskolbens (16) der Motor (30) wenigstens weitgehend lastfrei mitdreht oder die Bewegung des Arbeitskolbens (16) unterstützt und dass beim, oder kurz vor Erreichen einer Sollposition des Arbeitskolbens (16) der Motor (30) zum Abbremsen der Bewegung des Arbeitskolbens (16) angesteuert wird.

13. Verfahren nach Anspruch 12, **dadurch gekennzeichnet, dass** beim oder kurz vor Erreichen einer Sollposition des Arbeitskolbens (16) der Druck im jeweiligen Druckraum (18, 20) des Zylinders reduziert und/oder ein Gegendruck aufgebaut wird.

14. Verfahren nach Anspruch 12 oder 13, **dadurch gekennzeichnet, dass** der Motor (30) in Abhängigkeit von der Position und/oder der zeitlichen Änderung der Position des Arbeitskolbens (16) und/oder vom jeweiligen Druck und/oder der zeitlichen Änderung des jeweiligen Drucks in den Druckräumen (18, 20) des Zylinders angesteuert wird.

15. Verfahren nach Anspruch 12, 13 oder 14, **dadurch gekennzeichnet, dass** bei Erreichen einer Grenzlast des Motors der jeweilige Druck in den Druckräumen (18, 20) des Zylinders derart angesteuert wird, dass die Motorlast gesengt und/oder die durch den Motor (30) bewirkte oder beabsichtigte Bewegung des Arbeitskolbens (16) unterstützt wird.

## Claims

1. Rotary or pivotal unit (10, 32) having a drive (10, 32) comprising a working piston (16) which is housed in a cylinder (12) of a housing (14), can be loaded by fluid pressure media, and can be displaced in an axial direction, wherein the working piston (16) is operatively connected, via a rotary coupling, to a pivoting member, which is rotatably disposed in the housing and provided for disposition of gripping means, in such a manner that motion of the working piston (16) in an axial direction leads to pivotal motion of the pivoting member, wherein mechanical coupling means (22, 24) are provided on the working piston (16), which can be coupled to a motor (30) in such a fashion that the motor (30) can decelerate and/or drive the working piston in an axial direction.

2. Unit (10) according to claim 1, **characterized in that** the mechanical coupling means (22, 24) comprise a spindle nut (22) or spindle rod disposed on the working piston (16), and a spindle rod (24) or a spindle nut which can be driven by the motor.

3. Unit (10) according to claim 2, **characterized in that** the spindle nut (22) is connected to the working piston (16) such that it cannot rotate relative thereto and that a spindle rod (24) is rotatably disposed in the spindle nut (22), whose free end 26 facing away from the piston (16) is disposed on a drive shaft (28) of an electromotor (30) in such a way, that it cannot rotate relative thereto.

4. Unit (10) according to claim 3, **characterized in that** the free end of the spindle rod (24) facing away from the motor (30) is disposed inside the side of the working piston (16) which faces away from the motor (30) and is closed.

5. Unit (10) according to claim 1, **characterized in that** the mechanical coupling means comprise a toothed rack which is disposed on the working piston, and a pinion which can be driven by the motor.

6. Unit (32) according to claim 1, **characterized in that** the mechanical coupling means comprise a worm wheel (34) which is rotated by the working piston (14, 16) via a rotary coupling, and a worm (36) which can be driven by the motor (30) and which engages the worm wheel (34).

7. Unit (10, 32) according to any one of the preceding claims, **characterized in that** the coupling means (22, 24) work without self-locking.

8. Unit (10, 32) according to any one of the preceding claims, **characterized in that** the motor (30) may be flanged to the housing (14) or is disposed within the housing (14).

9. Unit (10, 32) according to any one of the preceding claims, **characterized in that** a regulation and/or control unit is provided which controls the motor (30) in dependence on the position and/or the temporal change of position of the working piston (16) and/or on the respective pressure and/or the temporal change of the respective pressure in the pressure chambers (18, 20) of the cylinder.

10. Unit (10, 32) according to any one of the preceding claims, **characterized in that** a regulation and/or control unit is provided which directly controls the pressure in the pressure chambers (18, 18) of the cylinder when a limit load of the motor (30) has been reached, to reduce the motor load and/or to support motion of the working piston (16) effected or controlled by the motor (30).

11. Unit (10, 32) according to any one of the preceding claims, **characterized in that** the coupling means have a high transmission ratio.

12. Method for operating a unit (10, 32) according to any one of the claims 1 through 11, **characterized in that**, when the cylinder (12) is loaded to move the working piston (16), the motor (30) also rotates at least substantially without load or supports the motion of the working piston (16), the motor (30) being driven to decelerate motion of the working piston (16) upon or shortly before reaching a target position of the working piston (16).

13. Method according to claim 12, **characterized in that** the pressure in the respective pressure chamber (18, 20) of the cylinder is reduced and/or a counter pressure is built up upon or shortly before reaching a target position of the working piston (16).

14. Method according to claim 12 or 13, **characterized in that** the motor (30) is driven in dependence on the position and/or the temporal change of the position of the working piston (16) and/or the respective pressure and/or the temporal change of the respective pressure in the pressure chambers (18, 20) of the cylinder.

15. Method according to claim 12, 13 or 14, **characterized in that**, when a limit load on the motor has been reached, the respective pressure in the pressure chambers (18, 20) of the cylinder is controlled in such a manner that the motor load is reduced and/or the motion of the working piston (16) effected or controlled by the motor (30) is supported.

## Revendications

1. Unité d'entraînement rotatif ou pivotant (10, 32) comportant un entraînement (10, 32) qui présente un piston de travail (16) logé dans le cylindre (12) d'une enveloppe (14), pouvant être actionné par des moyens de compression fluidiques et pouvant être déplacé dans le sens axial, le piston de travail (16) étant, par le biais d'un accouplement rotatif, en liaison active avec un élément pivotant monté en rotation dans l'enveloppe, lequel élément pivotant est prévu pour l'agencement de moyens de préhension, de telle façon que le déplacement du piston de travail (16) dans le sens axial engendre un mouvement de pivotement de l'élément pivotant, des moyens de couplage mécaniques (22, 24) étant agencés sur le piston de travail (16), lesquels peuvent être couplés à un moteur (30) de telle façon que le piston de travail (16) puisse être freiné et/ou entraîné dans le sens axial par le moteur (30).

2. Unité (10) selon la revendication 1, **caractérisée en ce que** les moyens de couplage mécaniques (22, 24) comprennent un écrou de broche (22) ou une tige de broche agencé(e) sur le piston de travail (16) et une tige de broche (24) ou un écrou de broche pouvant être entraîné(e) par le moteur (30).

3. Unité (10) selon la revendication 2, **caractérisée en ce que** l'écrou de broche (22) est relié au piston de travail (16) de manière résistante à la torsion et **en ce que**, dans l'écrou de broche (22), il est agencé en rotation une tige de broche (24) dont l'extrémité libre (26) orientée à l'opposé du piston de travail (16) est agencée sur un arbre d'entraînement (28) du moteur (30) de manière résistante à la torsion.

4. Unité (10) selon la revendication 3, **caractérisée en ce que** l'extrémité libre de la tige de broche (24) orientée à l'opposé du moteur (30) est située à l'intérieur du piston de travail (16) réalisé fermé du côté orienté à l'opposé du moteur (30).

5. Unité (10) selon la revendication 1, **caractérisée en ce que** les moyens de couplage mécaniques comprennent une crémaillère agencée sur le piston de travail et un pignon pouvant être entraîné par le moteur.

6. Unité (32) selon la revendication 1, **caractérisée en ce que** les moyens de couplage mécaniques comprennent une roue-vis (34) entraînée en rotation par le piston de travail (14, 16) par l'intermédiaire d'un accouplement rotatif et une vis sans fin (36) s'engrenant dans la roue-vis (34) et pouvant être entraînée par le moteur (30).

7. Unité (10, 32) selon l'une des revendications précédentes, **caractérisée en ce que** les moyens de couplage (22, 24) fonctionnent sans blocage automatique.

8. Unité (10, 32) selon l'une des revendications précédentes, **caractérisée en ce que** le moteur (30) est bridé ou peut être bridé sur l'enveloppe (14) ou bien est logé à l'intérieur de l'enveloppe (14).

9. Unité (10, 32) selon l'une des revendications précédentes, **caractérisée en ce qu'**il est prévu une unité de commande et/ou de régulation qui commande le moteur (30) en fonction de la position et/ou de la variation dans le temps de la position du piston de travail (16) et/ou en fonction de la pression et/ou de la variation dans le temps de la pression dans les chambres de compression (18, 20) du cylindre.

10. Unité (10, 32) selon l'une des revendications précédentes, **caractérisée en ce qu'**il est prévu une unité de commande et/ou de régulation qui, lorsque le moteur (30) a atteint une charge limite, commande la pression dans les chambres de compression (18, 20) du cylindre de telle façon que la charge moteur soit réduite et/ou le déplacement du piston de travail (16) prévu ou engendré par le moteur (30) soit soutenu.

11. Unité (10, 32) selon l'une des revendications précédentes, **caractérisée en ce que** les moyens de couplage présentent un rapport de multiplication/démultiplication élevé.

12. Procédé d'actionnement d'une unité (10, 32) selon l'une des revendications 1 à 11, **caractérisé en ce que**, lorsque le cylindre (12) est actionné pour déplacer le piston de travail (16), le moteur (30) tourne en même temps au moins largement à vide ou assiste le mouvement du piston de travail (16) et **en ce que**, lorsque l'on atteint une position prescrite du piston de travail (16) ou peu avant d'atteindre celle-ci, le moteur (30) est commandé pour freiner le déplacement du piston de travail (16).

13. Procédé selon la revendication 12, **caractérisé en ce que**, lorsque l'on atteint une position prescrite du piston de travail (16) ou peu avant d'atteindre celle-ci, la pression est réduite dans la chambre de compression concernée (18, 20) du cylindre et/ou une contre-pression est établie.

14. Procédé selon la revendication 12 ou 13, **caractérisé en ce que** le moteur (30) est commandé en fonction de la position et/ou de la variation dans le temps de la position du piston de travail (16) et/ou de la pression et/ou de la variation dans le temps de la pression dans les chambres de compression (18, 20) du cylindre.

15. Procédé selon la revendication 12, 13 ou 14, **caractérisé en ce que**, lorsque l'on atteint une charge limite du moteur, la pression dans les chambres de compression (18, 20) du cylindre est commandée de telle manière que la charge moteur soit réduite et/ou que le déplacement du piston de travail (16) prévu ou engendré par le moteur (30) soit soutenu.
